# EUROPÄISCHE PATENTSCHRIFT

(11) **EP 3 810 378 B1**
(45) Veröffentlichungstag und Bekanntmachung des Hinweises auf die Patenterteilung: **05.08.2026**
(21) Anmeldenummer: 19732900.6
(22) Anmeldetag: 06.06.2019
(51) Int. Cl.: B25J 9/16

(54) **VERFAHREN ZUR STEUERUNG VON ANTRIEBEN EINES ROBOTERS UND ROBOTERSYSTEM**
METHOD FOR CONTROLLING DRIVES OF A ROBOT, AND ROBOT SYSTEM
PROCÉDÉ DE COMMANDE DE MÉCANISMES D'ENTRAÎNEMENT D'UN ROBOT ET SYSTÈME DE ROBOT

(30) Priorität: 22.06.2018 DE 102018004947
(43) Veröffentlichungstag der Anmeldung: 28.04.2021
(73) Patentinhaber: SEW-EURODRIVE GmbH & Co. KG, 76646 Bruchsal (DE)
(72) Erfinder: MARTEN, Dominik, 76297 Stutensee (DE)
(86) Internationale Anmeldenummer: PCT/EP2019/025170
(87) Internationale Veröffentlichungsnummer: WO 2019/242885

(56) Entgegenhaltungen:
- BENJAMIN KEISER: "Torque Control of a KUKA youBot Arm", 30 September 2013 (2013-09-30), XP055632815, Retrieved from the Internet <URL:http://rpg.ifi.uzh.ch/docs/theses/Benjamin_Keiser_Torque_Control_2013.pdf> [retrieved on 20191016]
- RAINER KRENN ET AL: "Dynamics Simulation and Assembly Environment for Rapid Manipulator Design", 19 November 2002 (2002-11-19), XP055632808, Retrieved from the Internet <URL:https://pdfs.semanticscholar.org/cac3/d18c4b7b755bd758be561adeee9826630089.pdf> [retrieved on 20191016]

## Beschreibung

Die Erfindung betrifft ein Verfahren zur Steuerung von Antrieben eines Roboters und ein Robotersystem.

Aus der DE 10 2015 222 166 A1 ist ein sensitiver Roboter durch Sensorik von der ersten Roboterachse bekannt.

Aus der DE 10 2015 116 086 A1 ist eine Robotersteuerung mit graphischer Anzeige bekannt.

Aus der DE 11 2013 003 029 T5 ist eine Robotersteuerungsvorrichtung mit Berücksichtigung des Trägheitstensors bekannt.

Aus der DE 101 38 974 A1 ist ein Verfahren zur Bestimmung einer Nutzlast mit Berücksichtigung des Trägheitstensors bekannt.

Aus der EP 2 979 825 A1 ist ein Verfahren zur Energieeinsparung für Roboter mit graphischer Anzeige bekannt.

Aus der EP 2 954 986 A1 ist ein Verfahren zum Steuerung und Regeln eines Mehrkörpersystems unter Berücksichtigung des Trägheitstensors bekannt.

Aus der XP55632815 ist als nächstliegender Stand der Technik eine Drehmomentsteuerung eines Roboterarms bekannt.

Aus der XP55632808 ist eine Dynamiksimulation für einen Manipulator bekannt.

Der Erfindung liegt daher die Aufgabe zugrunde, ein Robotersystem einfach und sicher konfigurierbar weiterzubilden.

Erfindungsgemäß wird die Aufgabe bei dem Verfahren nach einem der Ansprüche 1-3 und bei dem Robotersystem mit den in Anspruch 4 angegebenen Merkmalen gelöst.

Wichtige Merkmale der Erfindung bei dem Verfahren sind, dass das Verfahren zur Steuerung von Antrieben eines Roboters vorgesehen ist,
wobei von den Antrieben des Roboters, ein Objekt, insbesondere Werkzeug oder Last, entlang einer Bahnkurve mit einem Geschwindigkeitsverlauf bewegt wird,
wobei zumindest ein erster der Antriebe des Roboters einen Körper, insbesondere Arm, des Roboters bewegt,
wobei der erste Antrieb einen Drehmomentenregler, aufweist, dem ein Drehmoment-Istwert und ein Drehmoment-Sollwert zugeführt wird,
wobei der Drehmoment-Sollwert als Summe aus einem Vorsteuerwert und einem Stellwert eines zweiten Reglers gebildet wird,
wobei dem zweiten Regler, der einer Drehzahlregler ist,
wobei ein Drehzahl-Istwert, insbesondere einer Maschinenachse, und ein Drehzahl-Sollwert zugeführt wird,
wobei der Körper aus Teilkörpern, insbesondere aus Teilkörpern mit homogener Massenverteilung, zusammengesetzt ist,
wobei der Vorsteuerwert aus dem Geschwindigkeitsverlauf unter Berücksichtigung der Masse der Teilkörper und der Trägheitstensoren der Teilkörper, und Koordinaten der Teilkörper im auf den Körper bezogenen Bezugssystem, bestimmt wird,
wobei zur graphischen Plausibilisierung des Wertes der Masse und zur Bestimmung und graphischen Plausibilisierung der Trägheitstensoren mittels der Benutzerschnittstelle eines mit der Steuerung zur Datenübermittlung verbundenen Rechners
   - ein Abbild eines Teilkörpers aus einer vorgegebenen Menge graphisch, dreidimensional, abgebildeter, unterschiedlicher Teilkörper jeweils ausgewählt wird und
   - die Masse des vom Abbild dargestellten Teilkörpers eingegeben wird,
wobei mittels der Benutzerschnittstelle des Rechners der Wert der Masse und der Komponenten des Trägheitstensors zur Plausibilisierung graphisch dreidimensional dargestellt und an die Steuerung übertragen wird,
wobei der Wert der jeweiligen Masse mittels graphischem Darstellen einer Kugel angezeigt wird, wobei die Größe der angezeigten Kugel, nämlich der Radius der Kugel, dem Wert der Masse entspricht, wobei mittels der eingegebenen Informationen und Werte ein Roboter konfiguriert wird, wobei die eingegebenen Werte vom Rechner an eine Steuerung des Roboters übertragen werden, wobei die graphischen Darstellungen von anderen Körpern eingeschaltet oder ausgeschaltet wird, wobei die für die graphische Darstellung verwendeten Umrechnungsfaktoren mit einem graphisch dargestellten, interaktiven, Schieberegler eingestellt werden.

Von Vorteil ist dabei, dass nach Auswahl des Teilkörpers, also auch nach Auswahl der Form des Teilkörpers, unter Berücksichtigung des eingegebenen Wertes für Masse die Trägheitseigenschaften graphisch angezeigt werden und somit vom Bediener auf Plausibilität prüfbar sind. Hierzu ist besonders wichtig, dass die Darstellung räumlich ist und somit der Bediener einen umfassenden Eindruck erhält.

Wichtige Merkmale bei dem Verfahren zum Betreiben eines Rechners mit Benutzerschnittstelle,
wobei ein Roboter graphisch angezeigt wird, welcher relativ zueinander drehbare Körper, insbesondere Arme, und ein Werkzeug und/oder eine Last aufweist,
wobei in einem ersten Verfahrensschritt einer der Körper aus einer angezeigten Menge von Körpern auswählbar ist und ein Wert einer Trägheitseigenschaft, insbesondere ein Wert der Masse, dieses Körpers eingebbar ist,

in einem zweiten Verfahrensschritt der Wert der Masse des Körpers, die Position des Schwerpunktes des Körpers und sowohl der Betrag als auch die Richtung jeder der Hauptträgheitsachsen des ausgewählten Körpers graphisch angezeigt werden.

Von Vorteil ist dabei, dass der Körper aus der angezeigten Menge von Körpern gemäß der gewünschten Form und Größe auswählbar ist und unter Berücksichtigung des eingegebenen Massewertes der Trägheitstensor bestimmbar und graphisch anzeigbar ist, so dass eine Plausibilitätsprüfung ausführbar ist.

Bei einer vorteilhaften Ausgestaltung wird im ersten Verfahrensschritt der Körper mehrteilig aus ausgewählten Teilkörpern zusammengesetzt und Werte der Trägheitseigenschaften, insbesondere Werte der Massen, dieser Teilkörper sind eingebbar,
wobei im zweiten Verfahrensschritt der Wert der Masse jedes der Teilkörper, die Position des Schwerpunktes jedes der Teilkörpers und sowohl der Betrag als auch die Richtung jeder der Hauptträgheitsachsen jedes der ausgewählten Teilkörper graphisch angezeigt werden. Von Vorteil ist dabei, dass der Körper mehrteilig ausführbar ist und die Trägheitseigenschaften aller Teilkörper anzeigbar sind und graphisch miteinander vergleichbar sind. Somit ist eine Prüfung auf Plausibilität einfach ausführbar.

Bei der Erfindung wird der Wert der jeweiligen Masse mittels graphischem Darstellen einer Kugel angezeigt, wobei die Größe der angezeigten Kugel, insbesondere der Radius der Kugel, dem Wert der Masse entspricht. Von Vorteil ist dabei, dass die Masse in einfacher Weise graphisch repräsentiert wird.

Bei der Erfindung wird mittels der eingegebenen Informationen und Werte ein Roboter konfiguriert,
wobei die eingegebenen Werte vom Rechner an eine Steuerung des Roboters übertragen werden. Von Vorteil ist dabei, dass eine einfache Konfigurierung ausführbar ist und die am Rechner bestimmten und plausibilisierten Werte an die Steuerung übertragbar sind und dort für die Bahnsteuerung verwendbar sind.

Wichtige Merkmale bei dem Robotersystem eingerichtet zur Durchführung des vorgenannten Verfahrens sind, dass das Robotersystem einen Roboter, eine Steuerung und einen Rechner mit Benutzerschnittstelle aufweist.

Von Vorteil ist dabei, dass abhängig von Form und Masse der Teilkörper die Trägheitsgrößen bestimmbar sind, insbesondere also Masse und Trägheitstensor. Diese sind graphisch an der Benutzerschnittstelle anzeigbar und somit überprüfbar auf Plausibilität. Danach sind die zugehörigen Werte an eine Steuerung übertragbar, welche den Roboter steuert, insbesondere also die Antriebe des Roboters.

Weitere Vorteile ergeben sich aus den Unteransprüchen.

Die Erfindung wird nun anhand von schematischen Abbildungen näher erläutert:
In der Figur 1 ist ein Roboter, insbesondere Industrieroboter schematisch skizziert, wobei ein Körper 2 des Roboters ausgewählt wird.

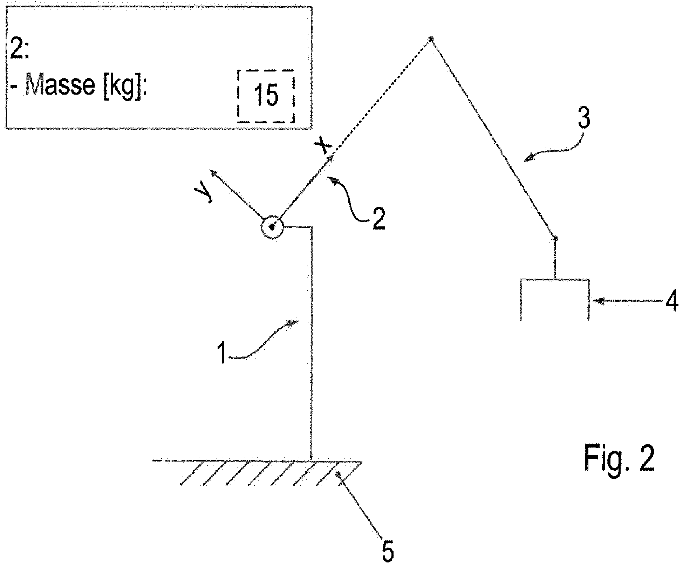

In der Figur 2 ist eine Eingabemöglichkeit für die Masse des ausgewählten Körpers 2 dargestellt.

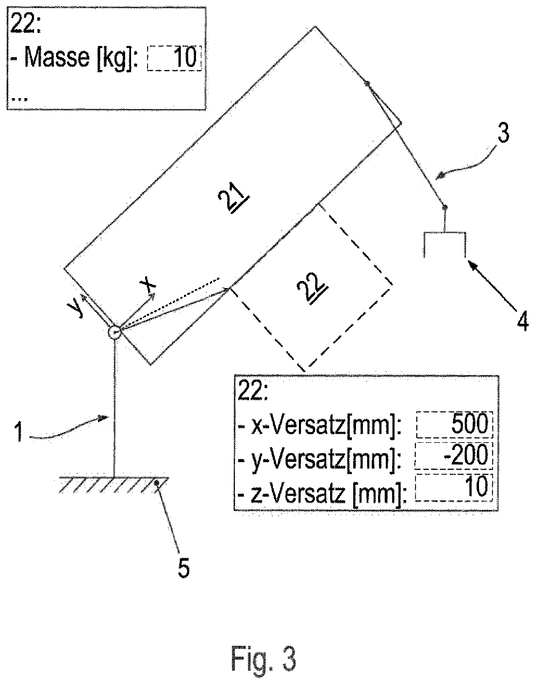

In der Figur 3 ist der Körper aus zwei Teilkörpern (21, 22) zusammengesetzt.
In der Figur 4 sind Schwerpunkte mit Massen und Hauptträgheitsachsen der beiden Teilkörper (21, 22) dargestellt.

Wie in den Figuren dargestellt, weist der Roboter Körper (1, 2, 3), insbesondere Arme, insbesondere Gelenkarme, auf, welche an Drehpunkten relativ zueinander drehbar angeordnet sind.

Der erste Körper 1 ist auf dem Boden 5 montiert. Drehgelagert zum ersten Körper ist ein zweiter Körper 2 vorgesehen und drehgelagert zum zweiten Körper 2 ist ein dritter Körper 3 vorgesehen, an welchem ein Werkzeug oder eine Last 4 angeordnet ist.

Jedem Drehpunkt ist eine Maschinenachse, insbesondere also auch ein umrichtergespeister Getriebemotor, zugeordnet, der von einer Steuerung steuerbar ist.

Die Steuerung samt dem Umrichter sind parametrierbar und mit einem Rechner verbunden, der eine graphische Benutzerschnittstelle, welche Eingabemittel und Anzeigemittel aufweist, aufweist.

In einem ersten Schritt zur Konfigurierung wird an der graphischen Benutzerschnittstelle ein Roboter ausgewählt, welcher dem zu steuernden Roboter entspricht.

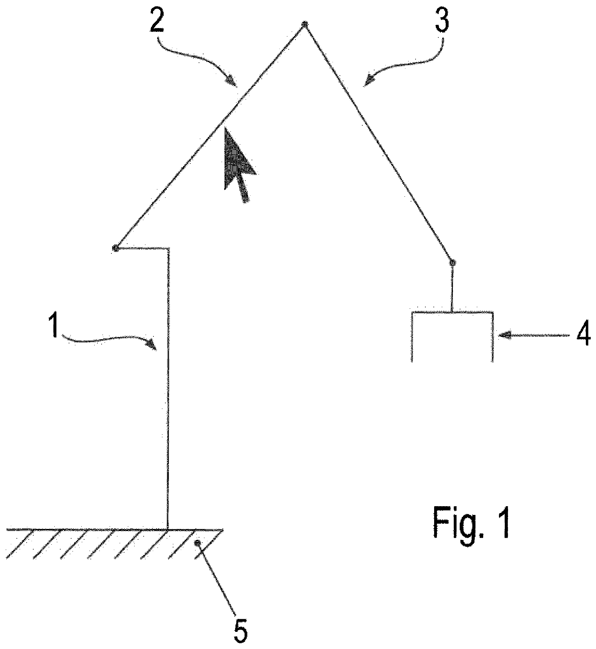

Dabei wird eine schematische Abbildung gemäß Figur 1 angezeigt.

Durch das in Figur 1 durch einen Pfeil symbolisierte Anklicken eines schematischen Abbildes eines Körpers 2 wird ein nächster Verfahrensschritt, nämlich eine Eingabe eines Parameters, wie Masse m des Körpers 2, ermöglicht und die Eingabe, dass der Körper 2 mehrteilig ausgeführt ist.

Falls eingegeben wurde, dass der Körper mehrteilig ausgeführt wäre, ist in einem nächsten Verfahrensschritt die Auswahl der Teilkörper (21, 22) und Eingabe der Parameter der Teilkörper (21, 22) des Körpers 2 ermöglicht. Dabei umfassen diese Parameter die Massen der Teilkörper (21, 22) und die drei räumlichen Komponenten des Vektors, welcher den Versatz und/oder Raumwinkellage des jeweiligen Körpers 22 zum Bezugskoordinatensystem oder zum Schwerpunkt des gesamten Körpers 2 darstellt.

Das Anzeigen des Eingabefensters wird durch Anklicken ausgelöst.

Die Eingabe von Parametern ist dann ermöglicht, insbesondere die Eingabe des translatorischen und/oder rotatorischen Versatzes der Teilkörper (21, 22) zum Bezugskoordinatensystem des aus den Teilkörpern (21, 22) gebildeten Gesamtkörpers, insbesondere also zweiten Körpers 2. Die eingegebenen Werte werden dabei graphisch dargestellt, insbesondere mittels Pfeilen oder Verbindungslinien.

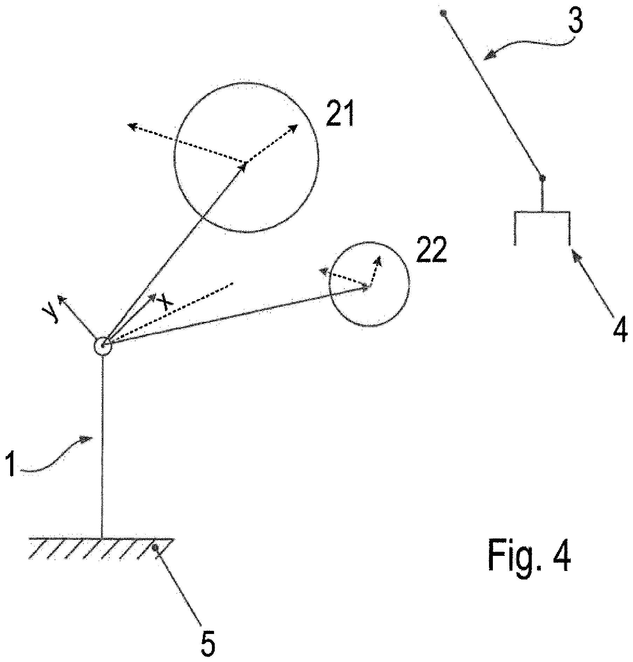

Des Weiteren wird, wie in Figur 4 gezeigt, der Schwerpunkt jedes Teilkörpers (21, 22) graphisch dargestellt., insbesondere indem eine Linie vom Bezugspunkt zum Schwerpunkt. Außerdem wird die Masse jedes Teilkörpers (21, 22) durch die Größe einer Kugel dargestellt, deren Mittelpunkt am Schwerpunkt des jeweiligen Teilkörpers (21, 22) positioniert ist. Dabei ist der Radius der jeweiligen Kugel proportional zur jeweiligen Masse.

Darüber hinaus werden zur graphischen Darstellung des Trägheitssensors des jeweiligen Teilkörpers (21, 22) auch die Hauptträgheitsachsen der Teilkörper (21, 22) dargestellt, insbesondere jeweils in Richtung und Betrag mittels Pfeilen dargestellt. Die Länge des jeweiligen Pfeils stellt den Betrag des jeweiligen Hauptträgheitsmoments dar.

Insbesondere werden auch die Trägheitseigenschaften durch einen gemeinsamen geometrischen, wie Quader mit homogener Massenverteilung dargestellt, obwohl der jeweilige

Teilköper (21, 22), nicht quaderförmig sein muss und auch keine homogene Massenverteilung aufweisen muss.

Vorzugsweise entspricht der Schwerpunkt des jeweiligen Quaders dabei dem Schwerpunkt des jeweiligen Teilkörpers (21, 22). Die Hauptträgheitsachsen des Quaders gleichen den Hauptträgheitsachsen des Teilkörpers (21, 22).

Mittels der graphischen Darstellung ist eine Plausibilitätsprüfung der bestimmten Größen in einfacher Weise ermöglicht. Insbesondere ist auch der Wert der Masse graphisch durch eine Kugel dargestellt und somit einfach vergleichbar mit den ebenso dargestellten Massewerten anderen Teilkörpern.

Nach der Bestimmung des Trägheitstensors durch den Rechner und graphischen Darstellung an der Benutzerschnittelle des Rechners werden die zugehörigen Werte und der Wert der Masse vom Rechner an die Steuerung übertragen und dort zur Bestimmung eines Vorsteuersignals, insbesondere also Vorsteuerwerteverlaufs, verwendet abhängig von einer vorgegebenen Bahnkurve. Das Vorsteuersignal entspricht einem Drehmomentenverlauf.

Erfindungsgemäß sind die graphischen Darstellungen von anderen Körpern, wie beispielsweise des ersten Körpers 1 oder des dritten Körpers 3, ein oder ausschaltbar.

Erfindungsgemäß sind die für die graphische Darstellung verwendeten Umrechnungsfaktoren einem graphisch dargestellten, insbesondere interaktiven, Schieberegler einstellbar.

### Bezugszeichenliste

1 Körper, insbesondere Arm
2 Körper, insbesondere Arm
3 Körper, insbesondere Arm
4 Last
5 Boden
21 Teilkörper
22 Teilkörper

## Patentansprüche

1. Verfahren zur Steuerung von Antrieben eines Roboters,
wobei von den Antrieben des Roboters ein Objekt, insbesondere Werkzeug oder Last (4), entlang einer Bahnkurve mit einem Geschwindigkeitsverlauf bewegt wird,
wobei zumindest ein erster der Antriebe des Roboters einen Körper, insbesondere Arm, des Roboters bewegt,
wobei der erste Antrieb einen Drehmomentenregler aufweist, dem als Drehmoment-Sollwert eine Summe aus einem Vorsteuerwert und einem Stellwert eines zweiten Reglers zugeführt wird,
wobei der zweite Regler als Drehzahlregler, insbesondere einer Maschinenachse, fungiert,
**wobei dem zweiten Regler ein Drehzahl-Istwert einer Maschinenachse und ein Drehzahl-Sollwert zugeführt wird,**
wobei der Körper (1, 2, 3) aus Teilkörpern (21, 22), insbesondere aus Teilkörpern (21, 22) mit homogener Massenverteilung, zusammengesetzt ist,
wobei der Vorsteuerwert aus dem Geschwindigkeitsverlauf unter Berücksichtigung der Masse der Teilkörper (21, 22) und der Trägheitstensoren der Teilkörper (21, 22) und Koordinaten der Teilkörper (21, 22) im auf den Körper (1, 2, 3) bezogenen Bezugssystem, bestimmt wird,
wobei zur graphischen Plausibilisierung des Wertes der Masse und zur Bestimmung und graphischen Plausibilisierung der Trägheitstensoren mittels der Benutzerschnittstelle eines mit der Steuerung zur Datenübermittlung verbundenen Rechners
- ein Abbild eines Teilkörpers aus einer vorgegebenen Menge graphisch dreidimensional abgebildeter, unterschiedlicher Teilkörper (21, 22) jeweils ausgewählt wird und
- die Masse des vom Abbild dargestellten Teilkörpers eingegeben wird,
wobei mittels der Benutzerschnittstelle des Rechners der Wert der Masse und der Komponenten des Trägheitstensors zur Plausibilisierung graphisch dreidimensional dargestellt und an die Steuerung übertragen wird,
**wobei der Wert der jeweiligen Masse mittels graphischem Darstellen einer Kugel angezeigt wird, wobei die Größe der angezeigten Kugel, nämlich der Radius der Kugel, dem Wert der Masse entspricht,**
**wobei mittels der eingegebenen Informationen und Werte ein Roboter konfiguriert wird,**
**wobei die eingegebenen Werte vom Rechner an eine Steuerung des Roboters übertragen werden,**
**wobei die graphischen Darstellungen von anderen Körpern eingeschaltet oder ausgeschaltet wird,**
**wobei die für die graphische Darstellung verwendeten Umrechnungsfaktoren mit einem graphisch dargestellten, interaktiven, Schieberegler eingestellt werden.**

2. Verfahren nach Anspruch 1 , wobei die Benutzerschnittstelle des Rechners graphisch und interaktiv ist und
wobei ein Roboter graphisch angezeigt wird, welcher relativ zueinander drehbare Körper (1, 2, 3), insbesondere Arme, und ein Werkzeug und/oder eine Last (4) aufweist,
**dadurch gekennzeichnet, dass**
in einem ersten Verfahrensschritt einer der Körper (1, 2, 3) aus einer angezeigten Menge von Körpern (1, 2, 3) auswählbar ist und ein Wert einer Trägheitseigenschaft, insbesondere ein Wert der Masse, dieses Körpers (1, 2, 3) eingebbar ist,
in einem zweiten Verfahrensschritt der Wert der Masse des Körpers (1, 2, 3), die Position des Schwerpunktes des Körpers (1, 2, 3) und sowohl der Betrag als auch die Richtung jeder der Hauptträgheitsachsen des ausgewählten Körpers (1, 2, 3) graphisch angezeigt werden.

3. Verfahren nach einem der vorangegangenen Ansprüche,
**dadurch gekennzeichnet, dass**
im ersten Verfahrensschritt der Körper (1, 2, 3) mehrteilig aus ausgewählten Teilkörpern (21, 22) zusammengesetzt wird und Werte der Trägheitseigenschaften, insbesondere Werte der Massen, dieser Teilkörper (21, 22) eingebbar sind,
wobei im zweiten Verfahrensschritt der Wert der Masse jedes der Teilkörper (21, 22), die Position des Schwerpunktes jedes der Teilkörpers und sowohl der Betrag als auch die Richtung jeder der Hauptträgheitsachsen jedes der ausgewählten Teilkörper (21, 22) graphisch angezeigt werden.

4. Robotersystem , eingerichtet zur Durchführung eines Verfahrens nach mindestens einem der vorangegangenen Ansprüche,
**dadurch gekennzeichnet, dass**
das Robotersystem einen Roboter, eine Steuerung und einen Rechner mit Benutzerschnittstelle aufweist.

## Claims

1. Method for controlling drives of a robot,
wherein an object, in particular a tool or a load (4), is moved by the drives of the robot along a trajectory with a velocity curve,
wherein at least a first of the drives of the robot moves a member, in particular an arm, of the robot,
wherein the first drive comprises a torque controller, to which a sum of a pilot control value and an adjustment value of a second controller is fed as a target torque value,
wherein the second controller acts as a speed controller, in particular of a machine shaft,
wherein an actual speed value of a machine shaft and a target speed value are fed to the second controller,
wherein the member (1, 2, 3) is composed of sub-members (21, 22), in particular of sub-members (21, 22) with a homogeneous mass distribution,
wherein the pilot control value is determined from the velocity curve, taking into account the mass of the sub-members (21, 22) and the inertia tensors of the sub-members (21, 22), and coordinates of the sub-members (21, 22) in the reference system based on the member (1, 2, 3),
wherein, in order to graphically check the plausibility of the value of the mass and to determine and graphically check the plausibility of the inertia tensors, the user interface of a computer connected to the controller for data transmission purposes is used
- to select a depiction of a sub-member in each case from a predefined set of different sub-members (21, 22) that are graphically represented in a three-dimensional manner, and
- to input the mass of the sub-member represented by the depiction,
wherein, in order to check the plausibility, the value of the mass and the components of the inertia tensor are graphically represented in a three-dimensional manner by means of the user interface of the computer and are transmitted to the controller,
wherein the value of the respective mass is displayed by means of a graphical representation of a sphere, wherein the size of the displayed sphere, namely the radius of the sphere, corresponds to the value of the mass,
wherein a robot is configured by means of the information and values that have been input,
wherein the values that have been input are transmitted from the computer to a controller of the robot,
wherein the graphical representations of other members are switched on or off,
wherein the conversion factors used for the graphical representation are adjusted by means of a graphically represented, interactive, slide control.

2. Method according to claim 1, wherein the user interface of the computer is graphical and interactive, and
wherein a robot is graphically displayed, the robot comprising members (1, 2, 3), in particular arms, which are rotatable relative to one another, and a tool and/or a load (4), **characterized in that**
in a first method step one of the members (1, 2, 3) can be selected from a displayed set of members (1, 2, 3), and a value of an inertial property, in particular a value of the mass, of this member (1, 2, 3) can be input,
in a second method step the value of the mass of the member (1, 2, 3), the position of the center of mass of the member (1, 2, 3), and both the magnitude and the direction of each of the principal axes of inertia of the selected member (1, 2, 3) are graphically displayed.

3. Method according to any of the preceding claims, **characterized in that**
in the first method step the member (1, 2, 3) is composed of selected sub-members (21, 22) in a multipart manner, and values of the inertial properties, in particular values of the masses, of these sub-members (21, 22) can be input,
wherein in the second method step the value of the mass of each of the sub-members (21, 22), the position of the center of mass of each of the sub-members, and both the magnitude and the direction of each of the principal axes of inertia of each of the selected sub-members are graphically displayed.

4. Robot system, configured to carry out a method according to at least one of the preceding claims,
**characterized in that**
the robot system comprises a robot, a controller, and a computer having a user interface.

## Revendications

1. Procédé pour la commande des entraînements d'un robot,
dans lequel, par les entraînements du robot, un objet, en particulier outil ou charge (4), est déplacé le long d'une trajectoire avec un profil de vitesse,
dans lequel au moins un premier des entraînements du robot déplace un corps, en particulier un bras, du robot,
dans lequel le premier entraînement comporte un régulateur de couple, auquel est fourni, en tant que consigne de couple, une somme d'une valeur de précommande et d'une valeur de réglage d'un second régulateur,
dans lequel le second régulateur fonctionne comme un régulateur de vitesse, en particulier d'un axe de machine,
dans lequel une valeur réelle de vitesse d'un axe de machine et une consigne de vitesse sont fournies au second régulateur,
dans lequel le corps (1, 2, 3) est assemblé à partir de sous-corps (21, 22), en particulier à partir de sous-corps (21, 22) avec répartition de masse homogène,
dans lequel la valeur de précommande est déterminée à partir du profil de vitesse en tenant compte de la masse des sous-corps (21, 22) et des tenseurs d'inertie des sous-corps (21, 22), et des coordonnées des sous-corps (21, 22) dans le système de référence relatif au corps (1, 2, 3), dans lequel, pour la validation graphique de la valeur de la masse et pour la détermination et la validation graphique des tenseurs d'inertie, au moyen de l'interface utilisateur d'un ordinateur relié à la commande pour la transmission de données,
- une représentation d'un sous-corps à partir d'un ensemble prédéfini de sous-corps (21, 22) différents, représentés graphiquement de manière tridimensionnelle, est sélectionnée dans chaque cas, et
- la masse du sous-corps représenté par la représentation est saisie,
dans lequel, au moyen de l'interface utilisateur de l'ordinateur, la valeur de la masse et les composants du tenseur d'inertie sont représentés graphiquement de manière tridimensionnelle pour la validation et transmis à la commande,
dans lequel la valeur de la masse respective est affichée par une représentation graphique d'une sphère, la taille de la sphère affichée, à savoir le rayon de la sphère, correspondant à la valeur de la masse,
dans lequel, au moyen des informations et valeurs saisies, un robot est configuré,
dans lequel les valeurs saisies sont transmises par l'ordinateur à une commande du robot,
dans lequel les représentations graphiques d'autres corps sont activées ou désactivées,
dans lequel les facteurs de conversion utilisés pour la représentation graphique sont réglés à l'aide d'un curseur interactif représenté graphiquement.

2. Procédé selon la revendication 1, dans lequel l'interface utilisateur de l'ordinateur est graphique et interactive et
dans lequel un robot est affiché graphiquement, lequel comporte des corps (1, 2, 3) pouvant tourner les uns par rapport aux autres, en particulier des bras, et un outil et/ou une charge (4), **caractérisé en ce que**
dans une première étape du procédé, l'un des corps (1, 2, 3) peut être sélectionné à partir d'un ensemble affiché de corps (1, 2, 3) et une valeur d'une propriété d'inertie, en particulier une valeur de la masse, de ce corps (1, 2, 3) peut être saisie, dans une seconde étape du procédé, la valeur de la masse du corps (1, 2, 3), la position du centre de gravité du corps (1, 2, 3) et à la fois la valeur absolue et la direction de chacun des axes principaux d'inertie du corps sélectionné (1, 2, 3) sont affichées graphiquement.

3. Procédé selon l'une des revendications précédentes, **caractérisé en ce que**
dans la première étape du procédé, le corps (1, 2, 3) est assemblé en plusieurs parties à partir de sous-corps (21, 22) sélectionnés et des valeurs des propriétés d'inertie, en particulier des valeurs des masses, de ces sous-corps (21, 22) peuvent être saisies, dans la seconde étape du procédé, la valeur de la masse de chacun des sous-corps (21, 22), la position du centre de gravité de chacun des sous-corps et à la fois la valeur absolue et la direction de chacun des axes principaux d'inertie de chacun des sous-corps (21, 22) sélectionnés sont affichées graphiquement.

4. Système robotisé, agencé pour réaliser un procédé selon au moins l'une des revendications précédentes, **caractérisé en ce que** le système robotisé comporte un robot, une commande et un ordinateur avec interface utilisateur.
